# FASCICULE DE BREVET EUROPEEN

(11) **EP 3 282 905 B1**
(45) Date de publication et mention de la délivrance du brevet: **26.02.2020**
(21) Numéro de dépôt: 16720457.7
(22) Date de dépôt: 14.04.2016
(51) Int. Cl.: A47J 37/12

(54) **ACCESSOIRE DE CUISSON ET APPAREIL ÉLECTRIQUE DE CUISSON COMPORTANT UN ACCESSOIRE DE CUISSON**
KOCHZUBEHÖR UND ELEKTRISCHES KOCHGERÄT MIT EINEM KOCHZUBEHÖR
COOKING ACCESSORY AND ELECTRICAL COOKING APPLIANCE COMPRISING A COOKING ACCESSORY

(30) Priorité: 17.04.2015 FR 1553456
(43) Date de publication de la demande: 21.02.2018
(73) Titulaire: SEB S.A., 69130 Ecully (FR)
(72) Inventeur: SEURAT, Frédéric, 21490 Bretigny (FR); MUHR, Nicolas, 39570 Messia Sur Sorne (FR); GAUDISSART, Charles, 21000 Dijon (FR)
(74) Mandataire: Bourrières, Patrice
(86) Numéro de dépôt international: PCT/FR2016/050875
(87) Numéro de publication internationale: WO 2016/166488

(56) Documents cités:
- WO-A2-2007/088283
- US-A- 4 542 685
- US-A1- 2012 285 337

## Description

La présente invention concerne le domaine des accessoires de cuisson pour la cuisson des aliments dans un bain de cuisson.

La présente invention concerne également les appareils électriques de cuisson comportant une cuve pour recevoir un bain de cuisson, un dispositif électrique de chauffe pour chauffer la cuve et/ou le bain de cuisson, ainsi qu'un accessoire de cuisson disposé dans la cuve pour porter les aliments à cuire.

La présente invention concerne notamment, mais non exclusivement, les friteuses électriques.

La cuisson des aliments dans un bain de cuisson s'effectue généralement en utilisant un panier de cuisson ajouré. Le bain de cuisson peut notamment être de l'huile ou de la matière grasse fondue, pour réaliser des fritures.

Certains aliments ou préparations peuvent présenter une consistance fragile, tels que par exemple des beignets de pommes de terre réalisés à partir de petits morceaux de pommes de terre agglomérés, et/ou une consistance semi-liquide, tels que par exemple des aliments panés comme des croquettes réalisées à partir de farine, de beurre, de lait et de fromage, recouvertes d'œuf et de chapelure. Ces aliments ou préparations doivent de préférence être disposés de manière espacée et sur une seule épaisseur dans le panier de cuisson, pour éviter leur dissociation lors de la cuisson et/ou pour éviter le collage d'aliments ou de préparations adjacents lors de la cuisson.

Il est connu de disposer un insert ajouré amovible dans un panier de cuisson ajouré, pour augmenter la surface de cuisson disponible.

Un appareil électrique de cuisson selon le préambule de la revendication 1 est connu du document US4542685.

Un objet de la présente invention est de proposer un appareil électrique de cuisson comportant un accessoire de cuisson pour la cuisson d'aliments dans un bain de cuisson avec un panier ajouré et un insert ajouré amovible par rapport au panier, dont l'utilisation soit aisée.

Un autre objet de la présente invention est de proposer un appareil électrique de cuisson comportant un accessoire de cuisson pour la cuisson d'aliments dans un bain de cuisson avec un panier ajouré et un insert ajouré amovible par rapport au panier, dont la construction soit économique.

Ces objets sont atteints avec un appareil électrique de cuisson, notamment friteuse, comportant une cuve pour recevoir un bain de cuisson, un dispositif électrique de chauffe pour chauffer la cuve et/ou le bain de cuisson, et un accessoire de cuisson disposé dans la cuve pour porter les aliments à cuire, l'accessoire de cuisson comportant un panier ajouré et un insert amovible comportant un support de cuisson ajouré, l'insert comportant deux organes de support opposés reposant sur un bord supérieur du panier lorsque le support de cuisson est disposé dans le panier, chaque organe de support étant prolongé par un organe de préhension s'étendant à distance du panier lorsque le support de cuisson est disposé dans le panier, du fait que chaque organe de préhension s'élève au dessus du niveau du bord supérieur du panier lorsque le support de cuisson est disposé dans le panier. Cette disposition permet de limiter l'encombrement latéral de l'insert. Les deux organes de support opposés permettent de favoriser une bonne stabilité du support de cuisson disposé dans le panier. Les deux organes de préhension de l'insert permettent de retirer aisément l'insert du panier. Les organes de préhension prolongeant les organes de support permettent d'obtenir une construction simple et économique.

Avantageusement alors, chaque organe de préhension s'étend à l'extérieur du panier lorsque le support de cuisson est disposé dans le panier. Cette disposition permet de faciliter l'accès au support de cuisson.

Selon une forme de réalisation avantageuse, l'un au moins des organes de support comporte deux brins recourbés fixés au support de cuisson et présentant chacun une zone d'appui pour reposer sur le bord supérieur du panier lorsque le support de cuisson est disposé dans le panier. Cette construction est économique et permet une bonne stabilité de l'insert disposé dans le panier.

Avantageusement alors, les deux brins recourbés de l'un au moins des organes de support se rejoignent pour former l'un des organes de préhension. Cette construction permet de former de manière simple des organes de préhension s'étendant dans une direction horizontale, par exemple parallèlement au bord supérieur du panier. Une telle construction est particulièrement économique et facilite la préhension de l'insert.

Selon une forme de réalisation préférée, chacun des organes de support comporte deux brins recourbés fixés au support de cuisson et présentant chacun une zone d'appui pour reposer sur le bord supérieur du panier lorsque le support de cuisson est disposé dans le panier.

Avantageusement alors, les deux brins recourbés de chacun des organes de support se rejoignent pour former l'un des organes de préhension.

Avantageusement encore, le panier est relié à une poignée de préhension. Si désiré, le panier peut être relié à au moins une autre poignée de préhension.

Avantageusement alors, la poignée de préhension s'étend entre les organes de préhension lorsque le support de cuisson est disposé dans le panier. Cette disposition permet de simplifier la réalisation des organes de préhension.

Selon une forme de réalisation, le dispositif électrique de chauffe comporte un boîtier électrique relié à une résistance électrique s'étendant à l'intérieur de la cuve, et le boîtier électrique s'étend entre les organes de préhension lorsque le support de cuisson est disposé dans le panier et que le panier est disposé dans la cuve.

Avantageusement, les organes de préhension sont agencés à l'intérieur de la cuve lorsque le support de cuisson est disposé dans le panier et que le panier est disposé dans la cuve. Ces dispositions permettent de faciliter le rangement de l'accessoire de cuisson. Un couvercle prévu pour fermer la cuve lorsque le panier est en place dans la cuve peut également être utilisé pour fermer la cuve lorsque le panier et l'insert sont en place dans la cuve.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un accessoire de cuisson,
- la figure 2 est une vue en perspective de dessus d'un insert appartenant à l'accessoire de cuisson illustré sur la figure 1,
- la figure 3 est une vue en perspective de dessus d'un appareil électrique comportant l'accessoire de cuisson illustré sur la figure 1.

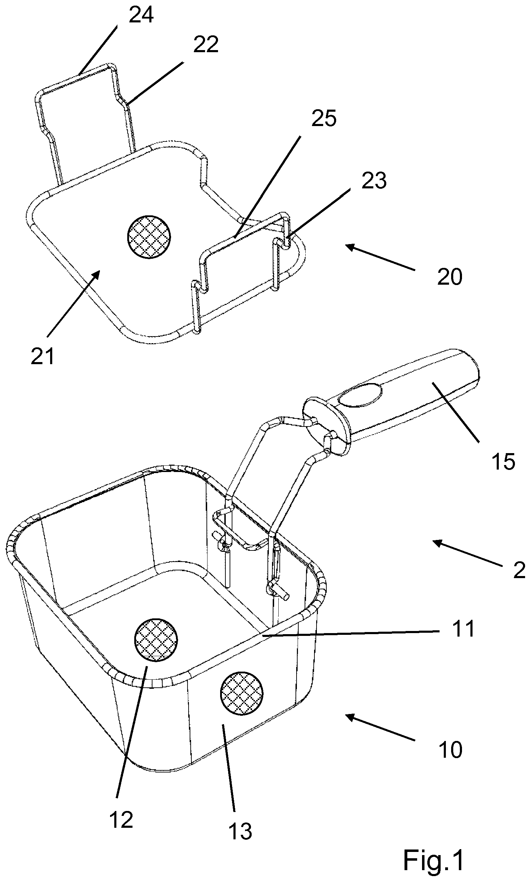

Un accessoire de cuisson 2 pour la cuisson d'aliments dans un bain de cuisson illustré sur la figure 1 comporte un panier 10 ajouré et un insert 20 amovible. L'insert 20 comporte un support de cuisson 21.

Dans l'exemple de réalisation illustré sur la figure 1, le panier 10 comporte un bord supérieur 11, un fond 12 et des parois latérales 13 reliant le fond 12 au bord supérieur 11. Le fond 12 est de préférence plan ou essentiellement plan. Le fond 12 et les parois latérales 13 sont de préférence ajourés. Le fond 12 et les parois latérales 13 sont par exemple constitués de maille métallique, tel que représenté schématiquement sur la figure 1. A titre de variante, d'autres réalisations peuvent être envisagées notamment un fond 12 et/ou des parois latérales perforées. Pour faciliter les manipulations, le panier 10 est relié à une poignée de préhension 15. Si désiré, la poignée de préhension 15 peut être montée mobile par rapport au panier 10, ou être amovible par rapport au panier 10.

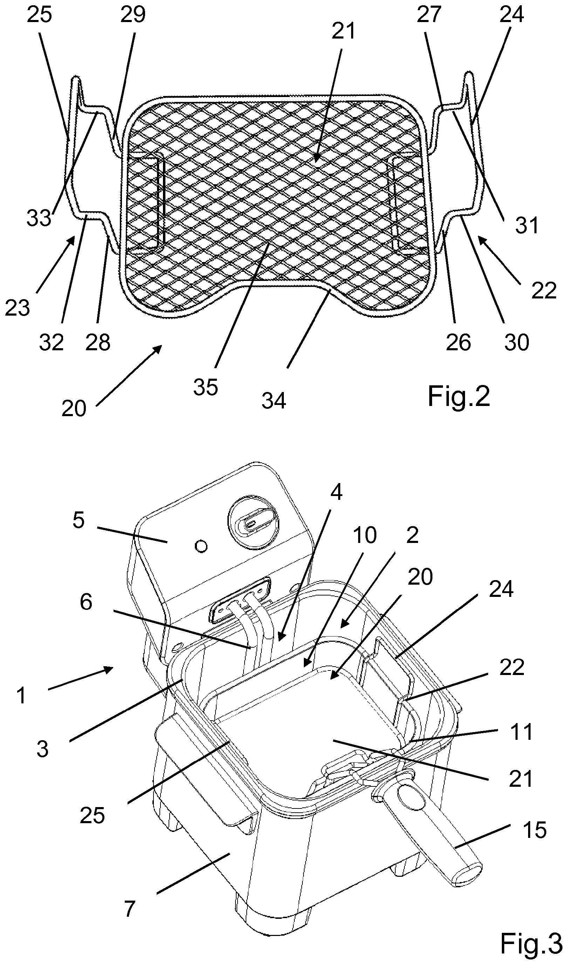

Dans l'exemple de réalisation illustré sur la figure 2, le support de cuisson 21 comporte un cadre 34 portant un maillage 35. Le maillage 35 est de préférence plan ou essentiellement plan. A titre de variante, d'autres réalisations peuvent être envisagées notamment un support de cuisson 21 perforé et/ou comportant au moins une portion de paroi latérale, ajourée ou non. Si désiré, le support de cuisson 21 peut être réalisé au moins partiellement en tôle perforée.

La figure 3 illustre un appareil électrique de cuisson 1 comportant l'accessoire de cuisson 2 ainsi qu'une cuve 3 pour recevoir un bain de cuisson et un dispositif électrique de chauffe 4 pour chauffer la cuve 3 et/ou le bain de cuisson. L'appareil électrique de cuisson 1 peut notamment être une friteuse, la cuve 3 recevant alors un bain d'huile.

Dans l'exemple de réalisation illustré sur la figure 3, le dispositif électrique de chauffe 4 comporte un boîtier électrique 5 relié à une résistance électrique 6 s'étendant à l'intérieur de la cuve 3 sous le panier 10. La cuve 3 est agencée dans un boîtier extérieur 7.

Tel que bien visible sur les figures 1 et 2, l'insert 20 comporte deux organes de support 22 ; 23 opposés. Tel que partiellement visible sur la figure 3, les organes de support 22 ; 23 reposent sur le bord supérieur 11 du panier 10 lorsque le support de cuisson 21 est disposé dans le panier 10.

Tel que mieux visible sur la figure 2, chaque organe de support 22 ; 23 est prolongé par un organe de préhension 24 ; 25. Tel que visible sur la figure 3, chaque organe de préhension 24 ; 25 s'étend à distance du panier 10 lorsque le support de cuisson 21 est disposé dans le panier 10. L'utilisateur peut ainsi soulever les organes de préhension 24 ; 25. Chaque organe de préhension 24 ; 25 s'étend à l'extérieur du panier 10 lorsque le support de cuisson 21 est disposé dans le panier 10. En d'autres termes, les organes de préhension 24 ; 25 ne s'étendent pas dans l'espace s'étendant au dessus du panier 10. Chaque organe de préhension 24 ; 25 s'élève au dessus du niveau du bord supérieur 11 du panier 10 lorsque le support de cuisson 21 est disposé dans le panier 10. En d'autres termes, le bord supérieur 11 du panier 10 s'étend plus bas que la partie supérieure des organes de préhension 24 ; 25.

Selon une forme de réalisation avantageuse illustrée sur les figures, l'un au moins des organes de support 22 ; 23 comporte deux brins recourbés 26, 27 ; 28, 29 fixés au support de cuisson 21. Chacun des brins recourbés 26, 27 ; 28, 29 présente une zone d'appui 30, 31 ; 32, 33 pour reposer sur le bord supérieur 11 du panier 10 lorsque le support de cuisson 21 est disposé dans le panier 10. De manière préférée alors, les deux brins recourbés 26, 27 ; 28, 29 de l'un au moins des organes de support 22 ; 23 se rejoignent pour former l'un des organes de préhension 24 ; 25.

Selon une forme de réalisation préférée illustrée sur les figures, chacun des organes de support 22 ; 23 comporte deux brins recourbés 26, 27 ; 28, 29 fixés au support de cuisson 21. De manière préférée alors, les deux brins recourbés 26, 27 ; 28, 29 de chacun des organes de support 22 ; 23 se rejoignent pour former l'un des organes de préhension 24 ; 25.

Tel que visible sur la figure 3, la poignée de préhension 15 s'étend entre les organes de préhension 24 ; 25 lorsque le support de cuisson 21 est disposé dans le panier 10. Le boîtier électrique 5 s'étend entre les organes de préhension 24 ; 25 lorsque le support de cuisson 21 est disposé dans le panier 10 et que le panier 10 est disposé dans la cuve 3. Les organes de préhension 24 ; 25 sont agencés à l'intérieur de la cuve 3 lorsque le support de cuisson 21 est disposé dans le panier 10 et que le panier 10 est disposé dans la cuve 3.

L'accessoire de cuisson illustré sur les figures 1 à 3 fonctionne et s'utilise de la manière suivante.

L'utilisateur peut placer une première série d'aliments à cuire sur le fond 12 du panier 10 et une deuxième série d'aliments à cuire sur le support de cuisson 21 de l'insert 20. L'utilisateur place l'insert 20 dans le panier 10 en saisissant ou en soulevant les deux organes de préhension 24 ; 25. Lorsque le support de cuisson 21 est en place dans le panier 10, les organes de support 22 ; 23 reposent sur le bord supérieur 11 du panier 10. L'insert 20 est ainsi en appui sur le bord supérieur 11 du panier 10, sans aucun coincement latéral. Les zones d'appui 30, 31 ; 32, 33 des brins recourbés 26, 27 ; 28, 29 assurent une bonne stabilité de l'insert 20 dans le panier 10. L'utilisateur peut alors placer le panier 10 portant l'insert 20 dans la cuve 3 contenant un bain de cuisson en utilisant la poignée de préhension 15.

Après la cuisson des aliments et le retrait du panier 10 portant l'insert 20 de la cuve 3, l'utilisateur retire l'insert 20 du panier 10 en saisissant ou en soulevant les deux organes de préhension 24 ; 25, si nécessaire avec des gants de protection et/ou avec des outils de préhension, en fonction de la température des organes de préhension 24 ; 25.

Lorsque le panier 10 est rangé dans la cuve 3, l'insert 20 disposé dans le panier 10 s'étend à l'intérieur de la cuve 3, ce qui permet de fermer la cuve 3 avec un couvercle de rangement.

L'accessoire de cuisson selon l'invention est simple à réaliser. L'accessoire de cuisson selon l'invention peut notamment comporter un insert réalisé pour être adapté à un panier existant. L'insert 20 est économique à réaliser.

A titre de variante, un coincement latéral de l'insert 20 peut être envisagé lorsque le support de cuisson 21 est en place dans le panier. Les brins recourbés 26, 27 ; 28, 29 peuvent par exemple venir en appui latéral contre le panier 10, notamment contre la face interne du bord supérieur 11.

A titre de variante, les organes de support 22 ; 23 et les organes de préhension 24 ; 25 ne sont pas nécessairement formés par des brins recourbés 26, 27 ; 28, 29 reliés chacun au support de cuisson 21. Notamment, chaque organe de support 22 ; 23 peut être relié au support de cuisson 21 par au moins un brin recourbé.

A titre de variante, les organes de support 22 ; 23 et les organes de préhension 24 ; 25 ne sont pas nécessairement formés par des brins recourbés 26, 27 ; 28, 29. Notamment, les organes de support 22 ; 23 et les organes de préhension 24 ; 25 peuvent être formés par une ou des plaques présentant au moins une zone d'appui pour reposer sur le bord supérieur 11 du panier 10 et au moins une zone de préhension s'étendant à distance du panier 10 lorsque le support de cuisson 21 est disposé dans le panier 10. Si désiré, l'insert 20 peut notamment être formé en une seule pièce, par exemple en tôle perforée pliée.

La présente invention n'est nullement limitée à l'exemple de réalisation décrit et à ses variantes, mais englobe de nombreuses modifications dans le cadre des revendications.

## Revendications

1. Appareil électrique de cuisson (1), notamment friteuse, comportant une cuve (3) pour recevoir un bain de cuisson, un dispositif électrique de chauffe (4) pour chauffer la cuve et/ou le bain de cuisson, et un accessoire de cuisson (2) disposé dans la cuve (3) pour porter les aliments à cuire, l'accessoire de cuisson (2) comportant un panier (10) ajouré et un insert (20) amovible comportant un support de cuisson (21) ajouré, l'insert (20) comportant deux organes de support (22 ; 23) opposés reposant sur un bord supérieur (11) du panier (10) lorsque le support de cuisson (21) est disposé dans le panier (10), chaque organe de support (22 ; 23) étant prolongé par un organe de préhension (24 ; 25) s'étendant à distance du panier (10) lorsque le support de cuisson (21) est disposé dans le panier (10), **caractérisé en ce que** chaque organe de préhension (24 ; 25) s'élève au dessus du niveau du bord supérieur (11) du panier (10) lorsque le support de cuisson (21) est disposé dans le panier (10).

2. Appareil électrique de cuisson (1) selon la revendication 1, **caractérisé en ce que** chaque organe de préhension (24 ; 25) s'étend à l'extérieur du panier (10) lorsque le support de cuisson (21) est disposé dans le panier (10).

3. Appareil électrique de cuisson (1) selon l'une des revendications 1 ou 2, **caractérisé en ce que** l'un au moins des organes de support (22 ; 23) comporte deux brins recourbés (26, 27 ; 28, 29) fixés au support de cuisson (21) et présentant chacun une zone d'appui (30, 31 ; 32, 33) pour reposer sur le bord supérieur (11) du panier (10) lorsque le support de cuisson (21) est disposé dans le panier (10).

4. Appareil électrique de cuisson (1) selon la revendication 3, **caractérisé en ce que** les deux brins recourbés (26, 27 ; 28, 29) de l'un au moins des organes de support (22 ; 23) se rejoignent pour former l'un des organes de préhension (24 ; 25).

5. Appareil électrique de cuisson (1) selon l'une des revendications 1 ou 2, **caractérisé en ce que** chacun des organes de support (22 ; 23) comporte deux brins recourbés (26, 27 ; 28, 29) fixés au support de cuisson (21) et présentant chacun une zone d'appui (30, 31 ; 32, 33) pour reposer sur le bord supérieur (11) du panier (10) lorsque le support de cuisson (21) est disposé dans le panier (10).

6. Appareil électrique de cuisson (1) selon la revendication 5, **caractérisé en ce que** les deux brins recourbés (26, 27 ; 28, 29) de chacun des organes de support (22 ; 23) se rejoignent pour former l'un des organes de préhension (24 ; 25).

7. Appareil électrique de cuisson (1) selon l'une des revendications 1 à 6, **caractérisé en ce que** le panier (10) est relié à une poignée de préhension (15).

8. Appareil électrique de cuisson (1) selon la revendication 7, **caractérisé en ce que** la poignée de préhension (15) s'étend entre les organes de préhension (24 ; 25) lorsque le support de cuisson (21) est disposé dans le panier (10).

9. Appareil électrique de cuisson (1) selon l'une des revendications 1 à 8, **caractérisé en ce que** le dispositif électrique de chauffe (4) comporte un boîtier électrique (5) relié à une résistance électrique (6) s'étendant à l'intérieur de la cuve (3), et **en ce que** le boîtier électrique (5) s'étend entre les organes de préhension (24, 25) lorsque le support de cuisson (21) est disposé dans le panier (10) et que le panier (10) est disposé dans la cuve (3).

10. Appareil électrique de cuisson (1) selon l'une des revendications 1 à 9, **caractérisé en ce que** les organes de préhension (24 ; 25) sont agencés à l'intérieur de la cuve (3) lorsque le support de cuisson (21) est disposé dans le panier (10) et que le panier (10) est disposé dans la cuve (3).

## Patentansprüche

1. Elektrisches Kochgerät (1), insbesondere Friteuse, aufweisend einen Tank (3) zum Aufnehmen eines Kochbades, eine elektrische Heizvorrichtung (4) zum Heizen des Tanks und / oder des Kochbades und ein Kochzubehör (2), das in dem Tank (3) zum Tra-gen der zu kochenden Nahrungsmittel angeordnet ist, wobei das Kochzubehör (2) einen durchbrochenen Korb (10) und einen herausnehmbaren Einsatz (20) aufweist, der einen durchbrochenen Kochträger (21) aufweist, wobei der Einsatz (20) zwei gegenüberliegende Trägerorgane (22; 23) aufweist, die auf einer oberen Kante (11) des Korbes (10) ruhen, wenn der Kochträger (21) in dem Korb (10) angeordnet ist, wobei jedes Trägerorgan (22; 23) durch ein Greiforgan (24; 25) verlängert ist, das sich im Abstand von dem Korb (10) erstreckt, wenn der Kochträger (21) in dem Korb (10) angeordnet ist, **dadurch gekennzeichnet, dass** jedes Greiforgan (24; 25) das Niveau der oberen Kante (11) des Korbs (10) übersteigt, wenn der Kochträger (21) in dem Korb (10) angeordnet ist.

2. Elektrisches Kochgerät (1) nach Anspruch 1, **dadurch gekennzeichnet, dass** sich jedes Greiforgan (24; 25) zu dem Äußeren des Korbs (10) erstreckt, wenn der Kochträger (21) in dem Korb (10) angeordnet ist.

3. Elektrisches Kochgerät (1) nach einem der Ansprüche 1 oder 2, **dadurch gekennzeichnet, dass** mindestens eines der Trägerorgane (22; 23) zwei gekrümmte Stränge (26, 27; 28, 29) aufweist, die an dem Kochträger (21) befestigt sind und jeweils einen Auflagebereich (30, 31; 32, 33) zum Ruhen auf der oberen Kante (11) des Korbes (10) vorweisen, wenn der Kochträger (21) in dem Korb (10) angeordnet ist.

4. Elektrisches Kochgerät (1) nach Anspruch 3, **dadurch gekennzeichnet, dass** die zwei gekrümmten Stränge (26, 27; 28, 29) mindestens eines der Trägerorgane (22; 23) zum Bilden eines der Greiforgane (24; 25) aufeinandertreffen.

5. Elektrisches Kochgerät (1) nach einem der Ansprüche 1 oder 2, **dadurch gekennzeichnet, dass** jedes der Trägerorgane (22; 23) zwei gekrümmte Stränge (26, 27; 28, 29) aufweist, die an dem Kochträger (21) befestigt sind und jeweils einen Auflagebereich (30, 31; 32, 33) zum Ruhen auf der oberen Kante (11) des Korbes (10) vorweisen, wenn der Kochträger (21) in dem Korb (10) angeordnet ist.

6. Elektrisches Kochgerät (1) nach Anspruch 5, **dadurch gekennzeichnet, dass** die zwei gekrümmten Stränge (26, 27; 28, 29) jedes der Trägerorgane (22; 23) zum Bilden eines der Greiforgane (24; 25) aufeinandertreffen.

7. Elektrisches Kochgerät (1) nach einem der Ansprüche 1 bis 6, **dadurch gekennzeichnet, dass** der Korb (10) mit einem Handgriff (15) verbunden ist.

8. Elektrisches Kochgerät (1) nach Anspruch 7, **dadurch gekennzeichnet, dass** sich der Handgriff (15) zwischen den Greiforganen (24; 25) erstreckt, wenn der Kochträger (21) in dem Korb (10) angeordnet ist.

9. Elektrisches Kochgerät (1) nach einem der Ansprüche 1 bis 8, **dadurch gekennzeichnet, dass** die elektrische Heizvorrichtung (4) einen elektrischen Kasten (5) aufweist, der mit einem elektrischen Widerstand (6) verbunden ist, der sich zu dem Inneren des Tanks (3) erstreckt, und dass sich der elektrische Kasten (5) zwischen den Greiforganen (24, 25) erstreckt, wenn der Kochträger (21) in dem Korb (10) angeordnet ist, und dass der Korb (10) in dem Tank (3) angeordnet ist.

10. Elektrisches Kochgerät (1) nach einem der Ansprüche 1 bis 9, **dadurch gekennzeichnet, dass** die Greiforgane (24; 25) im Inneren des Tanks (3) angeordnet sind, wenn der Kochträger (21) in dem Korb (10) angeordnet ist, und dass der Korb (10) in dem Tank (3) angeordnet ist.

## Claims

1. Electrical cooking appliance (1), in particular a fryer, including a tank (3) for receiving a cooking bath, an electrical heating device (4) in order to heat the tank and/or the cooking bath, and a cooking accessory (2) arranged in the tank (3) to carry the food to be cooked, with the cooking accessory (2) including a perforated basket (10) and a removable insert (20) including a perforated cooking support (21), with the insert (20) including two opposite support members (22; 23) resting on an upper edge (11) of the basket (10) when the cooking support (21) is arranged in the basket (10), with each support member (22; 23) being extended by a gripping member (24; 25) extending at a distance from the basket (10) when the cooking support (21) is arranged in the basket (10), **characterised in that** each gripping member (24; 25) rises above the level of the upper edge (11) of the basket (10) when the cooking support (21) is arranged in the basket (10).

2. Electrical cooking appliance (1) according to claim 1, **characterised in that** each gripping member (24; 25) extends outside the basket (10) when the cooking support (21) is arranged in the basket (10).

3. Electrical cooking appliance (1) according to one of claims 1 or 2, **characterised in that** at least one of the support members (22; 23) comprises two curved strands (26, 27; 28, 29) fastened to the cooking support (21) and each having a bearing zone (30, 31; 32, 33) to rest on the upper edge (11) of the basket (10) when the cooking support (21) is arranged in the basket (10).

4. Electrical cooking appliance (1) according to claim 3, **characterised in that** the two curved strands (26, 27; 28, 29) of at least one of the support members (22; 23) come together to form one of the gripping members (24; 25).

5. Electrical cooking appliance (1) according to one of claims 1 or 2, **characterised in that** each one of the support member (22; 23) comprises two curved strands (26, 27; 28, 29) fastened to the cooking support (21) and each having a bearing zone (30, 31; 32, 33) to rest on the upper edge (11) of the basket (10) when the cooking support (21) is arranged in the basket (10).

6. Electrical cooking appliance (1) according to claim 5, **characterised in that** the two curved strands (26, 27; 28, 29) of each one of the support members (22; 23) come together in order to form one of the gripping members (24; 25).

7. Electrical cooking appliance (1) according to one of claims 1 to 6, **characterised in that** the basket (10) is connected to a gripping handle (15).

8. Electrical cooking appliance (1) according to claim 7, **characterised in that** the gripping handle (15) extends between the gripping members (24; 25) when the cooking support (21) is arranged in the basket (10).

9. Electrical cooking appliance (1) according to one of claims 1 to 8, **characterised in that** the electrical heating device (4) comprises an electrical box (5) connected to an electrical resistance (6) extending inside the tank (3), and **in that** the electrical box (5) extends between the gripping members (24, 25) when the cooking support (21) is arranged in the basket (10) and the basket (10) is arranged in the tank (3).

10. Electrical cooking appliance (1) according to one of claims 1 to 9, **characterised in that** the gripping members (24; 25) are arranged inside the tank (3) when the cooking support (21) is arranged in the basket (10) and the basket (10) is arranged in the tank (3).
